(19) Europäisches Patentamt
European Patent Office
Office européen des brevets

(11) **EP 3 835 126 A1**

(12) **DEMANDE DE BREVET EUROPEEN**

(43) Date de publication:
**16.06.2021 Bulletin 2021/24**

(51) Int Cl.:
***B60Q 1/076*** *(2006.01)*     ***B60Q 1/12*** *(2006.01)*
***F21S 41/663*** *(2018.01)*

(21) Numéro de dépôt: **20207312.8**

(22) Date de dépôt: **12.11.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME
KH MA MD TN**

(30) Priorité: **09.12.2019 FR 1913926**

(71) Demandeur: **RENAULT s.a.s.
92100 Boulogne-Billancourt (FR)**

(72) Inventeur: **VIEIRA-FERNANDES, Amanda
92130 ISSY LES MOULINEAUX (FR)**

(54) **PROCÉDÉ ET SYSTÈME DE COMMANDE D'UN FEU DE CROISEMENT ADAPTATIF AUX VIRAGES CONFIGURÉ POUR ADAPTER L'ANGLE D'ACTIVATION DUDIT FEU**

(57) Procédé (20) de commande d'un système d'éclairage d'un véhicule automobile comprenant au moins un capteur proprioceptif capables de récupérer les angles de braquage des roues ($\alpha$, $\beta$), ledit système d'éclairage comprenant au moins un feu de croisement adaptatif.

On adapte l'activation du feu de croisement adaptatif en fonction d'un angle de regard ($\theta$) du conducteur automobile.

## FIG.1

**Description**

La présente invention concerne le domaine des systèmes d'éclairage de véhicules automobiles et plus particulièrement la commande des systèmes d'éclairage de véhicules automobiles.

Les véhicules automobiles comprennent généralement deux ensembles de projecteurs avant permettant la mise en œuvre d'au moins deux modes d'éclairage différents, à savoir un mode dit « feux de route » pour une visibilité améliorée et un mode dit « feux de croisement », dans lequel un faisceau lumineux est adapté pour éviter l'éblouissement des conducteurs des véhicules circulant en sens inverse.

On peut se référer au document FR 2 786 448 - A1 qui décrit une installation de projecteurs comprenant un feu de croisement, un feu de route et un feu antibrouillard. Lors du fonctionnement du feu de route, le feu de croisement s'est relevé de façon à agrandir son faisceau lumineux en zone proche et ainsi augmenter la portée de l'éclairage du feu de route. L'installation comprend en outre un dispositif de surveillance configurée pour éteindre le feu de croisement et pour allumer le feu antibrouillard en cas de dysfonctionnement dudit feu de croisement.

Toutefois, l'usage des feux antibrouillard est réglementé et interdit par temps de pluie, de sorte que leur utilisation pour pallier un dysfonctionnement des feux de croisement n'est pas satisfaisante.

Il existe également des projecteurs orientables configurés pour adapter leur orientation en fonction des conditions de roulage, telles que le type de voie et la direction de la route ou encore des projecteurs configurés pour élargir leur faisceau lumineux en fonction desdites conditions de roulage.

On connait également des systèmes d'éclairage frontal dit « adaptatif », ou Adaptative Front Lightning System, d'acronyme « AFS » en termes anglo-saxons. De tels systèmes sont connus également sous le nom de système d'éclairage à faisceaux anti-éblouissement. Ces systèmes d'éclairage permettent d'adapter la configuration du faisceau lumineux à la présence d'autres véhicules circulant devant soi, que ce soit en sens inverse ou dans le même sens, tout en améliorant la visibilité à longue distance du conducteur et sans causer d'inconfort ou d'éblouissement des usagers des autres véhicules.

De tels systèmes d'éclairage sont commandés en créant des zones sombres dans le faisceau de feu de route. Ces zones sombres sont localisées sur les véhicules circulant en sens inverse ou dans le même sens. La création de telles zones sombres est possible grâce à la segmentation de la photométrie et à l'extinction des segments afin de ne pas éblouir les usagers des autres véhicules circulant.

L'éclairage de virage peut également être obtenu par le pivotement du feu de croisement autour d'un axe vertical.

L'activation de ces systèmes d'éclairage de virage sont généralement activés lorsque le rayon de courbure horizontal de la trajectoire du centre de gravité du véhicule est inférieur à une valeur de seuil, telle que par exemple 500m qui correspond à la valeur réglementaire en vigueur. Pour déterminer la trajectoire du centre de gravité du véhicule, il est connu d'utiliser l'angle de braquage du volant.

On connait par exemple le document FR2857921 - B1 qui décrit un projecteur lumineux fixe de virage comprenant une unité de commande configurée pour commander un allumage progressif des sources lumineuses en fonction d'un signal du capteur de volant et d'informations sur la trajectoire du véhicule.

Toutefois, cet angle de braquage ne correspond pas à la zone sur laquelle se porte le regard du conducteur, ce qui engendre une activation tardive de l'éclairage de virage.

L'objectif de l'invention est donc de pallier ces inconvénients et d'améliorer l'activation des systèmes d'éclairage de virage.

La présente invention a pour objet un procédé de commande d'un système d'éclairage d'un véhicule automobile comprenant au moins un capteur proprioceptif capables de récupérer les angles de braquage des roues, ledit système d'éclairage comprenant au moins un feu de croisement adaptatif.

Le procédé est configuré pour adapter l'activation du feu de croisement adaptatif en fonction d'un angle de regard du conducteur automobile.

Avantageusement, le procédé de commande comprend une étape de calcul du rayon de courbure du centre de gravité du véhicule en fonction des angles de braquage des roues et de l'empattement du véhicule.

Par exemple, le procédé comprend une étape de calcul de l'angle du regard en fonction du rayon de courbure du centre de gravité d'un véhicule.

Avantageusement, le procédé de commande comprend une étape de comparaison de l'angle du regard avec une valeur de seuil et une étape d'activation du système d'éclairage lorsque l'angle du regard est supérieur à ladite valeur de seuil.

Selon un second aspect, l'invention concerne un système de commande d'un système d'éclairage d'un véhicule automobile comprenant au moins un capteur proprioceptif capables de récupérer les angles de braquage des roues, ledit système d'éclairage comprenant au moins un feu de croisement adaptatif.

Le système de commande est configuré pour adapter l'activation du feu de croisement adaptatif en fonction d'un angle de regard du conducteur automobile.

Avantageusement, le système de commande comprend un module de calcul du rayon de courbure du centre de gravité du véhicule en fonction des angles de braquage des roues et de l'empattement du véhicule.

Par exemple, le système de commande comprend un module de calcul de l'angle du regard en fonction du rayon de courbure du centre de gravité d'un véhicule.

Avantageusement, le système de commande comprend un module de comparaison de l'angle du regard avec une valeur de seuil et d'activation du système d'éclairage lorsque l'angle du regard est supérieur à ladite valeur de seuil.

Selon un autre aspect, l'invention concerne un véhicule automobile comprenant au moins un capteur proprioceptif, un système d'éclairage comprenant au moins un feu de croisement adaptatif et un système de commande dudit système d'éclairage tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une vue schématique un véhicule automobile comprenant un système d'éclairage et un système de commande du système d'éclairage selon un mode de réalisation de l'invention ;
[Fig 2] et

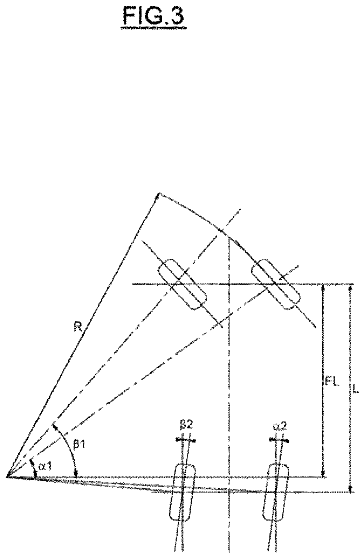

[Fig 3] illustrent des données de trajectoire utilisées par le système de commande de la figure 1 ;

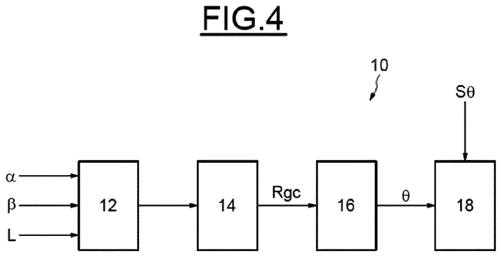

[Fig 4] représente en détails le système de commande de la figure 1 ; et
[Fig 5] illustre un organigramme d'un procédé de commande d'un système d'éclairage d'un véhicule automobile selon un mode de réalisation de l'invention mis en œuvre par le système de commande de la figure 4.

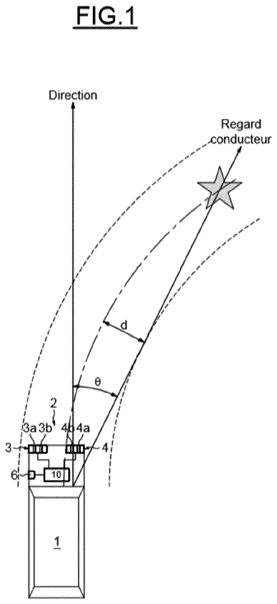

Sur la figure 1, on a représenté de manière très schématique un véhicule automobile 1 comprenant un système d'éclairage 2 et un système de commande 10 dudit système d'éclairage 2.

Le système d'éclairage 2 comprend un premier projecteur 3 situé à droite du véhicule 1 et un deuxième projecteur 4 situé à gauche du véhicule. Chacun des projecteurs 3, 4 comprend un boîtier (non représenté) renfermant un feu de route 3a, 4a et un feu de croisement 3b, 4b dit adaptatif. Le boîtier peut également comprendre un capteur de luminosité (non représenté).

Chaque feu de croisement 3b, 4b peut comprendre une seule source lumineuse (non représentée), telle que par exemple une diode électroluminescente, d'acronyme « LED ». En variante, chaque feu de croisement 3b, 4b pourrait être segmentés en plusieurs segments, par exemple au nombre de deux ou plus, chacun des segments comprenant une source lumineuse. Chacune des sources lumineuses est commandée indépendamment. Les feux de croisement 3b, 4b sont adaptatifs au virage de la route. Le fonctionnement de tels feux de croisement est connu en soi et ne sera pas davantage décrit.

Le véhicule automobile 1 comprend également un ou plusieurs capteur proprioceptif 6, tel que notamment un capteur d'angle de braquage des roues.

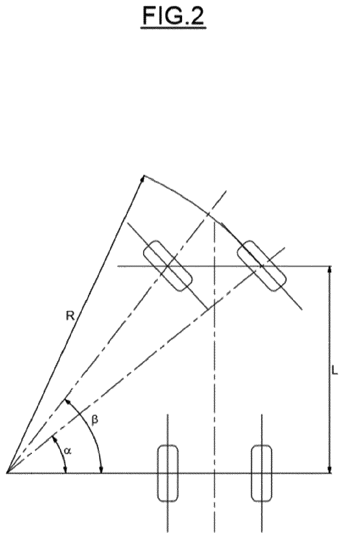

Tel qu'illustré en détails sur la figure 2, le système de commande 10 du système d'éclairage 2 comprend un module 12 de récupération des données provenant des capteurs proprioceptifs 6, afin de récupérer notamment, mais non exclusivement, les angles $\alpha$, $\beta$ de braquage des roues. Le module 12 de récupération des données récupère également l'empattement L de la voiture.

Le système de commande 10 du système d'éclairage 2 comprend en outre un module 14 de calcul du rayon de courbure du virage Rgc en fonction des angles $\alpha$, $\beta$ de braquage des roues et de l'empattement L du véhicule.

Le rayon de courbure du centre de gravité d'un véhicule à deux roues motrices s'écrit selon l'équation suivante :

[Math 1]

$$Rgc = L.\frac{sin(\alpha) + sin(\beta)}{2.sin(\alpha).sin(\beta)}$$

Avec :

$\alpha$, l'angle de braquage de la roue extérieure au virage, exprimé en rad ;
$\beta$, l'angle de braquage de la roue intérieure au virage, exprimé en rad ; et
L, l'empattement du véhicule, exprimé en m.

Le rayon de courbure du centre de gravité d'un véhicule à quatre roues motrices s'écrit selon l'équation suivante :

[Math 2]

$$Rgc = \frac{FL.sin(\alpha 1) + sin(\beta 1)}{2.sin(\alpha 1).sin(\beta 1)}$$

Avec :

α1 , l'angle de braquage de la roue avant extérieure au virage, exprimé en rad ;

β1, l'angle de braquage de la roue avant intérieure au virage, exprimé en rad ; et

FL, la projection de l'empattement L du véhicule par rapport à la ligne horizontale de référence utilisée pour mesurer les angles de roue, exprimé en m. FL tend ver L si les roues sont droites.

La projection de l'empattement FL se calcule par rapport à l'empattement L de la voiture selon l'équation suivante :

[Math 3]

$$FL = \frac{L}{1 + \frac{tan(\frac{\alpha2 + \beta2}{2})}{tan(\frac{\alpha2 + \beta2}{2})}}$$

Avec :

α1 l'angle de braquage de la roue avant extérieure au virage exprimé en rad ;

a2, l'angle de braquage de la roue arrière extérieure au virage, exprimé en rad ;

β2, l'angle de braquage de la roue arrière intérieure au virage, exprimé en rad ; et

L, l'empattement du véhicule, exprimé en m.

Le système de commande 10 comprend en outre un module 16 de calcul d'un angle du regard θ en fonction du rayon de courbure Rgc du centre de gravité d'un véhicule définit par le module 14.

L'angle du regard θ est défini selon l'équation suivante :

[Math 4]

$$\theta = \sqrt{\frac{2.d}{Rgc}}$$

Avec :

d, la distance entre la tangente à la voie et le centre de gravité de la voiture, exprimé en m.

La distance d peut être déterminé de plusieurs façons différentes décrites ci-après.

Selon une première méthode, il est possible de considérer qu'en moyenne la largeur d'une voie est égale à 3m et que la voiture est censée être conduite dans le centre de la voie donc d peut être estimé toujours à 1.5m.

Selon une autre méthode, on peut utiliser une caméra frontale avec un radar frontal et calculer la distance d entre le centre de la voiture et le bord de la voie.

Selon encore une autre méthode, on peut utiliser un GPS.

Ainsi, l'angle du regard θ est proportionnel à l'angle de braquage.

Le système de commande 10 comprend en outre 18 de commande du système d'éclairage configuré pour comparer l'angle du regard θ avec une valeur de seuil θseuil et activer le système d'éclairage lorsque l'angle du regard θ est supérieur à ladite valeur de seuil θseuil.

Par exemple, lors le véhicule circule sur un rond-point, l'angle du regard typique est d'environ de 25°. On pourrait considérer que ladite valeur de seuil θseuil est comprise entre 15° et 30°, par exemple égale à 25°.

Ainsi, l'angle du regard correspond à l'angle d'activation du système d'éclairage et notamment des feux dédiés au suivi de virage, ce qui a permet une activation de l'éclairage de virage répondant aux besoins du conducteurs. En effet, le conducteur du véhicule suit l'angle du virage et la trajectoire du centre de gravité du véhicule avec la direction du regard. L'angle du regard tel que calculé correspond à la zone proche à la tangente du virage.

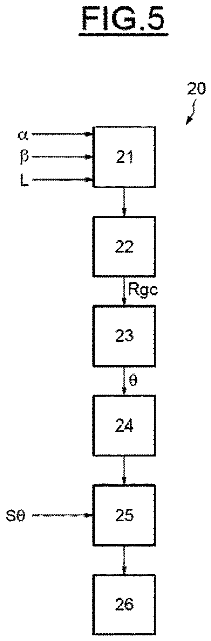

Tel qu'illustré sur la figure 5, le procédé 20 de commande du système d'éclairage 2 comprend une étape 21 de récupération des données provenant des capteurs proprioceptifs 6, afin de récupérer notamment, mais non exclusivement, les angles α, β de braquage des roues. A l'étape 21, on récupère également l'empattement L de la voiture.

Le procédé de commande 20 du système d'éclairage 2 comprend en outre une étape 22 de calcul du rayon de courbure du virage Rgc en fonction des angles α, β de braquage des roues et de l'empattement L du véhicule, selon les équations Math 1 et Math 2 ci-dessus.

Le procédé de commande 20 comprend en outre une étape 23 de calcul d'un angle du regard θ en fonction du rayon de courbure Rgc du centre de gravité d'un véhicule définit à l'étape 22, selon l'équation Math 4 ci-dessus.

A l'étape 24, on compare l'angle du regard θ avec une valeur de seuil θseuil et on active, à l'étape 25, le système d'éclairage lorsque l'angle du regard θ est supérieur à ladite valeur de seuil θseuil.

Grâce à l'invention, l'activation des feux de virage est améliorée et correspond aux besoins du conducteur du véhicule, et ce, sans ajout de capteurs additionnels.

**Revendications**

1. Procédé (20) de commande d'un système d'éclairage (2) d'un véhicule automobile (1) comprenant au moins un capteur proprioceptif capables de récupérer les angles de braquage des roues (α, β), ledit système d'éclairage (2) comprenant au moins un feu de croisement adaptatif (3b, 4b), **caractérisé en ce que** l'on adapte l'activation du feu de croisement adaptatif en fonction d'un angle de regard (θ) du conducteur automobile.

2. Procédé (20) de commande selon la revendication 1, comprenant une étape (22) de calcul du rayon de courbure du centre de gravité du véhicule (Rgc) en fonction des angles de braquage des roues (α, β) et de l'empattement (L) du véhicule.

3. Procédé (20) de commande selon la revendication 2, comprenant une étape (23) de calcul de l'angle du regard (θ) en fonction du rayon de courbure (Rgc) du centre de gravité d'un véhicule.

4. Procédé (20) de commande selon la revendication 3, comprenant une étape (24) de comparaison de l'angle du regard (θ) avec une valeur de seuil (θseuil) et une étape (25) d'activation du système d'éclairage (2) lorsque l'angle du regard (θ) est supérieur à ladite valeur de seuil (θseuil).

5. Système (10) de commande d'un système d'éclairage (2) d'un véhicule automobile (1) comprenant au moins un capteur proprioceptif capables de récupérer les angles de braquage des roues (α, β), ledit système d'éclairage (2) comprenant au moins un feu de croisement adaptatif (3b, 4b), **caractérisé en ce qu'**il est configuré pour adapter l'activation du feu de croisement adaptatif en fonction d'un angle de regard (θ) du conducteur automobile

6. Système (10) de commande selon la revendication 5, comprenant un module (14) de calcul du rayon de courbure du centre de gravité du véhicule (Rgc) en fonction des angles de braquage des roues (α, β) et de l'empattement (L) du véhicule.

7. Système (10) de commande selon la revendication 6, comprenant un module (16) de calcul de l'angle du regard (θ) en fonction du rayon de courbure (Rgc) du centre de gravité d'un véhicule.

8. Système (10) de commande selon la revendication 7, comprenant un module (18) de comparaison de l'angle du regard (θ) avec une valeur de seuil (θseuil) et d'activation du système d'éclairage (2) lorsque l'angle du regard (θ) est supérieur à ladite valeur de seuil (θseuil).

9. Véhicule automobile (1) comprenant au moins un capteur proprioceptif (6), un système d'éclairage (2) comprenant au moins un feu de croisement adaptatif (3b, 4b) et un système de commande (10) dudit système d'éclairage (2) selon l'une quelconque des revendications 5 à 8.

# FIG.1

# FIG.2

# FIG.3

## FIG.4

# FIG.5

Europäisches
Patentamt

European
Patent Office

Office européen
des brevets

**RAPPORT DE RECHERCHE EUROPEENNE**

Numéro de la demande

EP 20 20 7312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2018/204960 A1 (ZKW GROUP GMBH [AT]) 15 novembre 2018 (2018-11-15) * le document en entier * | 1-9 | INV. B60Q1/076 B60Q1/12 F21S41/663 |
| X | US 2016/068097 A1 (LANGKABEL FRANK [DE] ET AL) 10 mars 2016 (2016-03-10) * le document en entier * | 1-9 | |
| X | DE 10 2007 060399 A1 (GM GLOBAL TECH OPERATIONS INC [US]) 18 juin 2009 (2009-06-18) * le document en entier * | 1-9 | |
| X | US 2016/152173 A1 (MAYER PETER [AT]) 2 juin 2016 (2016-06-02) * le document en entier * | 1-9 | |
| A | CN 109 435 833 A (UNIV HUBEI ARTS & SCIENCE) 8 mars 2019 (2019-03-08) * le document en entier * | 1-9 | DOMAINES TECHNIQUES RECHERCHES (IPC) |
| A | CN 108 773 317 A (BOE TECHNOLOGY GROUP CO LTD) 9 novembre 2018 (2018-11-09) * le document en entier * | 1-9 | F21S B60Q |
| A | US 2016/090025 A1 (NAGASAWA ISAMU [JP]) 31 mars 2016 (2016-03-31) * le document en entier * ----- -/-- | 1-9 | |

Le présent rapport a été établi pour toutes les revendications

| Lieu de la recherche | Date d'achèvement de la recherche | Examinateur |
|---|---|---|
| Munich | 3 mai 2021 | Berthommé, Emmanuel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 20 20 7312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LAURA POMARJANSCHI ET AL: "Gaze guidance reduces the number of collisions with pedestrians in a driving simulator", ACM TRANSACTIONS ON INTERACTIVE INTELLIGENT SYSTEMS (TIIS), vol. 1, no. 2, 1 janvier 2012 (2012-01-01) , pages 1-14, XP055416312, 2 Penn Plaza, Suite 701 New York NY 10121-0701 USA ISSN: 2160-6455, DOI: 10.1145/2070719.2070721 * le document en entier * ----- | 1-9 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 3 mai 2021 | Berthommé, Emmanuel |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 7312

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2021

| Document brevet cité au rapport de recherche | | Date de publication | Membre(s) de la famille de brevet(s) | | Date de publication |
|---|---|---|---|---|---|
| WO 2018204960 | A1 | 15-11-2018 | AT | 519767 A4 | 15-10-2018 |
| | | | EP | 3621848 A1 | 18-03-2020 |
| | | | WO | 2018204960 A1 | 15-11-2018 |
| US 2016068097 | A1 | 10-03-2016 | CN | 105398369 A | 16-03-2016 |
| | | | DE | 102014013165 A1 | 10-03-2016 |
| | | | US | 2016068097 A1 | 10-03-2016 |
| DE 102007060399 | A1 | 18-06-2009 | AUCUN | | |
| US 2016152173 | A1 | 02-06-2016 | AT | 14438 U1 | 15-11-2015 |
| | | | AT | 514633 A1 | 15-02-2015 |
| | | | CN | 105358374 A | 24-02-2016 |
| | | | CN | 107901825 A | 13-04-2018 |
| | | | EP | 3022089 A1 | 25-05-2016 |
| | | | US | 2016152173 A1 | 02-06-2016 |
| | | | WO | 2015006793 A1 | 22-01-2015 |
| CN 109435833 | A | 08-03-2019 | AUCUN | | |
| CN 108773317 | A | 09-11-2018 | AUCUN | | |
| US 2016090025 | A1 | 31-03-2016 | CN | 105459885 A | 06-04-2016 |
| | | | DE | 102015115954 A1 | 31-03-2016 |
| | | | JP | 5941111 B2 | 29-06-2016 |
| | | | JP | 2016068791 A | 09-05-2016 |
| | | | US | 2016090025 A1 | 31-03-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2786448 A1

- FR 2857921 B1